Europäisches Patentamt

European Patent Office

Office européen des brevets

(11) Numéro de publication : **0 231 698**
**B1**

(12) **FASCICULE DE BREVET EUROPÉEN**

(45) Date de publication du fascicule du brevet :
09.11.88

(21) Numéro de dépôt : **86402847.7**

(22) Date de dépôt : **17.12.86**

(51) Int. Cl.⁴ : **B 60 N 1/04**, B 60 N 1/06

(54) **Perfectionnements aux sièges rabattables de véhicules.**

(30) Priorité : **18.12.85 FR 8518777**

(43) Date de publication de la demande :
**12.08.87 Bulletin 87/33**

(45) Mention de la délivrance du brevet :
**09.11.88 Bulletin 88/45**

(84) Etats contractants désignés :
**DE ES GB IT SE**

(56) Documents cités :
**DE-A- 2 032 147**
**FR-A- 1 550 069**
**FR-A- 2 354 214**
**FR-A- 2 523 526**
**GB-A- 2 141 624**
**US-A- 1 609 249**
**US-A- 4 209 158**

(73) Titulaire : **BERTRAND FAURE AUTOMOBILE**
**5, rue Auguste Brunot**
**ROCQUENCOURT (Yvelines) (FR)**

(72) Inventeur : **Boisset, Bernard**
**4, Clos de Montfaucon**
**F-91150 Etampes (FR)**
Inventeur : **Letournoux, Alain**
**23, rue de la Rosette**
**F-45100 Saint Jean de Blanc (FR)**

(74) Mandataire : **Behaghel, Pierre et al**
**CABINET PLASSERAUD 84 rue d'Amsterdam**
**F-75009 Paris (FR)**

EP 0 231 698 B1

**Description**

La présente invention concerne les sièges de véhicule propres à être rabattus ou basculés vers l'avant à partir de leur position normale de conduite en vue notamment de libérer l'accès aux places arrière si le véhicule est du type dit « trois portes ».

Elle vise plus particulièrement, parmi ces sièges, ceux qui comprennent un soubassement solidarisable avec le plancher du véhicule, une assise reposant sur le soubassement par l'intermédiaire d'un dispositif de réglage en hauteur et un dossier, ledit siège étant monté pivotant autour d'un axe transversal lié rigidement au soubassement de façon à pouvoir basculer vers l'avant en entraînant l'arrière de l'assise.

Elle concerne plus particulièrement encore le cas où le dispositif de réglage en hauteur comprend une paire de crémaillères avant parallèles espacées transversalement, une paire de crémaillères arrière parallèles espacées transversalement, deux pignons avant coaxiaux d'axe transversal solidarisés entre eux par une traverse avant rigide montée sur l'assise et propres à coopérer avec les crémaillères avant, deux pignons arrière coaxiaux d'axe transversal solidarisés entre eux par une traverse arrière rigide montée sur l'assise et propres à coopérer avec les crémaillères arrière et au moins un organe de commande accessible à l'usager du siège lorsqu'il est assis sur ledit siège et propre à commander la rotation d'au moins l'une des deux paires de pignons.

Dans les modes de réalisation connus de ces sièges, le dossier est monté pivotant sur l'assise elle-même, ce qui présente certes l'avantage d'éviter toute influence des basculements du siège sur le dispositif de réglage en hauteur, mais présente aussi certains inconvénients et en particulier les suivants :

- l'ancrage du dossier sur le plancher du véhicule passe par l'intermédiaire du mécanisme de réglage en hauteur : cette liaison est en général insuffisamment robuste pour répondre aux exigences relatives à l'ancrage des sièges et dossiers sur le plancher du véhicule, vu le risque d'arrachement de ceux-ci lors des décélérations brusques,

- le réglage de hauteur concerne le siège dans son ensemble, ce qui ne permet pas d'effectuer un réglage lombaire par déplacement vertical relatif de l'assise par rapport au dossier.

L'invention permet de remédier à ces divers inconvénients.

A cet effet, selon l'invention, l'axe commun aux deux pignons avant du dispositif de réglage en hauteur est lié à l'axe commun aux deux pignons arrière par l'intermédiaire d'une entretoise rigide, les crémaillères avant sont montées pivotantes autour d'un axe transversal lié rigidement au soubassement du siège, les crémaillères arrière sont solidaires du dossier et l'axe de basculement du siège est lié rigidement au dossier.

Dans des modes de réalisation préférés, on a recours en outre à l'une et/ou à l'autre des dispositions suivantes :

- les crémaillères avant sont parallèles aux crémaillères arrière lorsque le dossier se trouve en sa position normale de conduite,

- lorsque le dossier se trouve en sa position normale de conduite, les crémaillères sont inclinées sur la verticale, leurs extrémités hautes se trouvant en arrière par rapport à leurs extrémités basses : cette mesure permet d'augmenter automatiquement l'étendue longitudinale de la surface de portage de l'assise lors d'un réglage de cette dernière vers le bas, et inversement,

- le siège comprend des moyens pour solidariser angulairement les pignons avant et les pignons arrière : cette mesure permet d'assurer le réglage en hauteur de l'assise à l'aide d'un seul organe de commande,

- dans un siège selon l'alinéa précédent, les moyens de solidarisation angulaire comprennent deux roues dentées solidaires respectivement des pignons avant et des pignons arrière et une chaîne sans fin ou analogue coopérant avec ces deux roues,

- l'organe de commande du dispositif de réglage en hauteur de l'assise est un bouton rotatif associé à des moyens de blocage automatique de ce bouton au repos,

- l'organe de commande du dispositif de réglage en hauteur de l'assise est l'interrupteur d'excitation d'un moteur électrique,

- le siège comprend un train d'engrenages démultiplicateur interposé entre l'organe de commande et les pignons actionnés par cet organe, de telle sorte que la rotation d'un tour de l'organe ne corresponde qu'à la rotation d'une fraction de tour des pignons,

- le siège comprend au moins un ressort hélicoïdal de tension dont une extrémité est fixée sur l'entretoise rigide reliant l'axe des pignons avant et l'axe des pignons arrière, et dont l'autre extrémité est fixée sur une bande enroulée sur un tambour solidaire d'un desdits pignons, de telle sorte que ce pignon soit sollicité angulairement dans le sens de la montée de l'assise.

L'invention sera mieux comprise à la lecture de la description qui suit d'un mode particulier de réalisation, donné à titre d'exemple non limitatif.

La description se réfère aux dessins qui l'accompagnent dans lesquels :

- la figure 1 montre schématiquement un siège établi selon l'invention en sa position normale de conduite, deux hauteurs différentes étant indiquées pour l'assise, respectivement en trait plein et en trait mixte,

- la figure 2 montre schématiquement le même siège en sa position basculée vers l'avant,

- la figure 3 est une vue latérale partielle du dispositif de réglage en hauteur de l'assise,

- la figure 4 est une vue en coupe selon IV-IV de la figure 3,

- la figure 5 est une vue en plan d'un système de compensation du poids de l'usager du siège selon une réalisation avantageuse de l'invention.

Le siège considéré comporte un soubassement 1 solidarisable avec le plancher 2 du véhicule, une assise 3 et un dossier 4.

Le soubassement 1 comprend :

- deux glissières 5 s'étendant longitudinalement, c'est-à-dire selon la direction avant-arrière du véhicule et permettant le réglage en position longitudinale du siège,

- et deux socles 6 montés sur ces glissières 5, socles constitués par des âmes métalliques verticales s'étendant longitudinalement.

Le dossier 4 comprend une ossature en U renversé dont les extrémités inférieures des deux bras sont coudées vers l'avant et sont montées pivotantes sur les socles 6 autour d'un même axe transversal A lié à ces socles et situé à peu près au milieu de leur étendue longitudinale.

Au niveau du coude de l'un au moins de ses bras, le dossier 4 comprend un crochet 8 sollicité élastiquement vers une position de repos et propre à coagir avec un pion 9 d'un socle aux fins de fixation du dossier en sa position arrière, qui est la position normale de conduite.

Ce crochet 8 est actionnable d'une façon connue en soi à partir d'une manette 10 prévue dans la partie haute du dossier.

Les extrémités des bras coudés de l'ossature sont terminées par deux becs 11 s'étendant vers l'avant et dont la butée contre les fonds des socles 6 ou contre les glissières 5 supportant ces socles constitue des butées de fin de course angulaire pour les basculements du dossier vers l'avant.

Le dispositif de réglage en hauteur de l'assise 3 comprend :

- deux crémaillères avant parallèles 12 portées respectivement par deux biellettes parallèles 13 situées des deux côtés du siège, ces biellettes étant elles-mêmes montées pivotantes autour d'un axe transversal avant B lié aux socles 6 et étant entretoisées par une barre transversale 7,

- deux crémaillères arrière parallèles 14 portées respectivement par les bases des deux bras du dossier 4, bases elles-mêmes constituées par des flasques 15,

- deux pignons avant 16 solidarisés entre eux par une traverse 17 et propres à coopérer avec les deux crémaillères avant 12,

- et deux pignons arrière 18 solidarisés entre eux par une traverse 19 et propres à coopérer avec les deux crémaillères arrière 14.

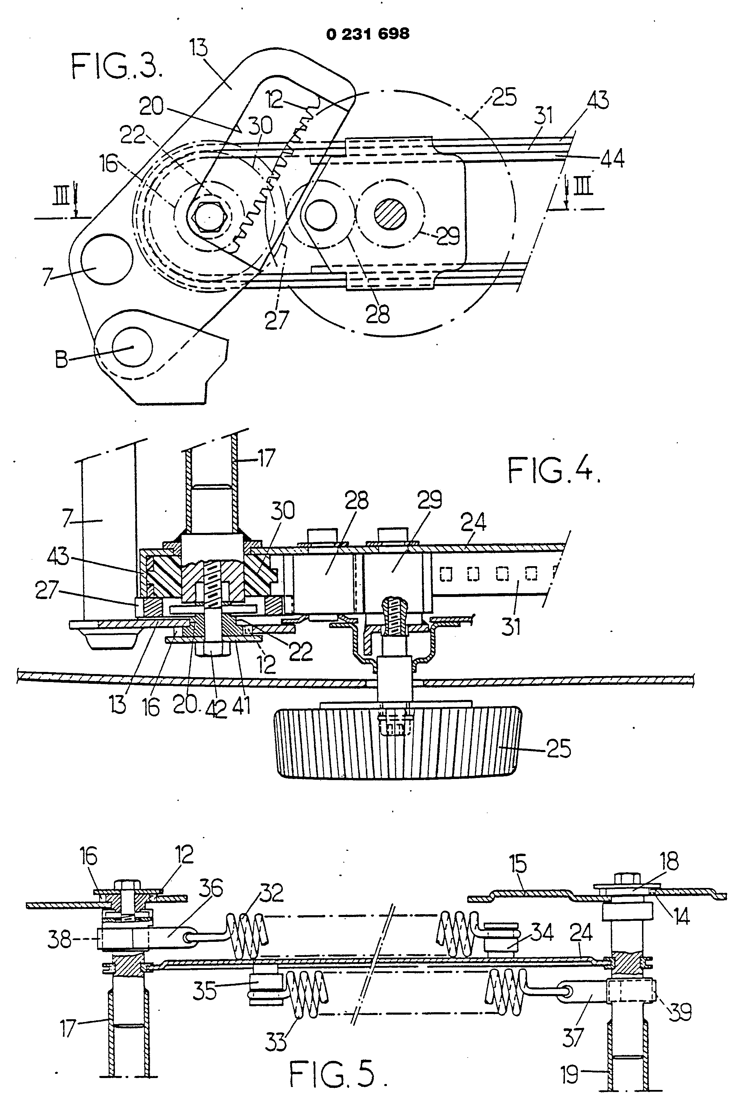

Pour que les coopérations indiquées entre les pignons et les crémaillères soient assurées de façon permanente, lesdits pignons sont logés dans des lumières allongées et étroites 20 et 21 évidées respectivement dans les biellettes 13 et dans les flasques 15. Les bords allongés de ces lumières sont rectilignes et parallèles, l'un étant lisse et l'autre, denté de façon à constituer l'une des crémaillères 12 et 14. Chaque pignon est alors solidaire d'une bague cylindrique de révolution 22 (figure 4) propre à rouler ou glisser jointivement contre le bord lisse de la lumière 20 ou 21 considérée, ce bord étant décalé légèrement, selon la direction transversale, par rapport à la crémaillère associée, pour permettre les deux contacts lisse et denté concernés (voir figure 4).

Enfin le positionnement axial de chaque ensemble pignon-bague dans sa lumière est déterminé par emprisonnement axial du pignon entre d'une part une rondelle débordante 41 vissée en bout par une vis 42 sur la traverse correspondante 17 ou 19 et d'autre part le flanc, de la biellette ou flasque correspondant, adjacent au bord lisse de la lumière considérée.

Deux entretoises rigides parallèles 24 s'étendent entre les deux traverses 17 et 19 de façon à former avec elles un châssis rectangulaire indéformable, lesdites traverses 17 et 19 étant montées pivotantes sur lesdites entretoises 24.

C'est sur ce châssis qu'est montée l'assise, elle-même constituée de toute manière désirable, notamment par un baquet recouvert d'un coussin.

Une poignée de commande rotative 25 accessible à la personne assise sur le siège est reliée aux pignons avant 16 par un jeu de trois engrenages 27, 28 et 29 dont le premier 27 est solidaire angulairement des pignons 16 et dont le troisième 29 est solidaire angulairement de la poignée 25.

Le rapport de ce train est tel que la rotation d'un tour de la poignée 25 corresponde à une fraction de tour seulement des pignons 16.

Cette mesure permet de réduire le risque de réversibilité des commandes assurées par les rotations de la poignée.

Selon une disposition préférée mais non indispensable, les deux paires de pignons sont solidarisées angulairement entre elles par un mécanisme comportant d'une part deux roues crantées 30 ou analogues solidaires respectivement de ces deux paires de pignons et, d'autre part, une chaîne crantée sans fin 31 propre à coagir avec les deux roues 30, chaîne par exemple constituée par une bande mince perforée glissant jointivement entre deux lames de protection 43 et 44.

Cette mesure permet de régler la hauteur de l'assise par des manœuvres uniques.

Elle suppose que, lorsque le dossier 4 se trouve en sa position normale de conduite, les différentes crémaillères 12 et 14 soient toutes parallèles entre elles.

Dans ces conditions, les manœuvres de la poignée se traduisent par des modifications de la hauteur de l'assise 3 seule, c'est-à-dire indépendamment du dossier 4, et ce sans aucune modification de l'orientation de cette assise.

Selon une autre disposition préférée de l'invention, pour la position de conduite normale, les crémaillères sont inclinées sur la verticale avec leurs points hauts en arrière de leurs points bas.

Le sens choisi pour l'obliquité de ces crémaillères permet d'allonger automatiquement la dimension longitudinale de la surface de portage de l'assise lorsqu'on abaisse celle-ci, ce qui permet d'adopter automatiquement le siège à la morphologie des usagers, en améliorant le soutien des avant-cuisses des usagers à jambes longues (position basse) sans pour autant empêcher les usagers à jambes courtes de s'asseoir à fond sur le siège et donc de s'adosser contre le dossier (position haute).

Pour rendre possible les déplacements verticaux signalés ci-dessus de l'assise par rapport au dossier, on prévoit dans la partie arrière de la matelassure d'assise un volume qui peut s'écraser au contact de la matelassure du dossier.

Pour rendre les commandes de la poignée 25 aussi faciles dans le sens de l'élévation de l'assise que dans le sens de son abaissement, on prévoit avantageusement des moyens pour compenser le poids moyen d'un usager.

Dans le mode de réalisation montré à titre d'exemple sur la figure 5, ces moyens comprennent deux ressorts hélicoïdaux de tension 32, 33 tendus respectivement chacun entre un pion 34, 35 solidaire de l'une des entretoises 24 et une bande 36, 37 partiellement enroulée autour d'un tambour 38, 39 angulairement solidaire, le premier, des pignons 16, et le second, des pignons 18 : bien entendu, dans chaque cas, le sens d'enroulement de la bande est tel que la tension du ressort qui lui est associé a tendance à faire tourner les pignons concernés dans le sens pour lequel ils tendent à grimper le long des crémaillères.

Le fonctionnement du siège décrit ci-dessus est le suivant.

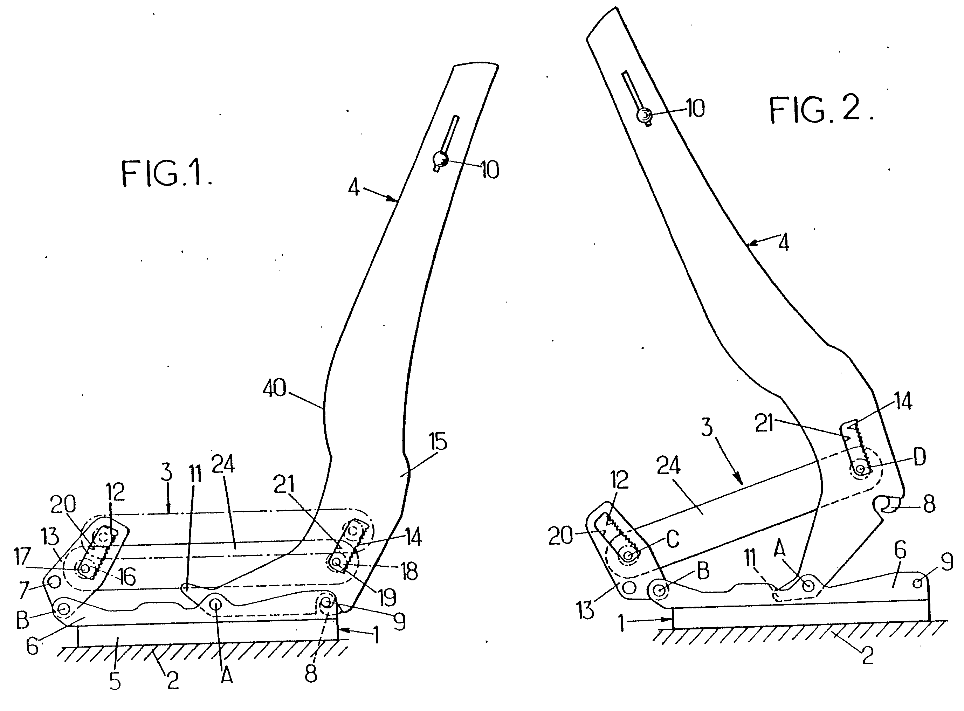

Pour la position normale de conduite, le dossier 4 est verrouillé en sa position arrière par coopération du crochet 8 avec le pion 9 (figure 1).

Toutes les crémaillères 12 et 14 sont alors parallèles entre elles.

Il suffit alors de tourner la poignée 25 pour modifier la hauteur de l'assise par rotation simultanée des pignons le long des crémaillères avec lesquelles ils coopèrent.

Il est à noter :

- que ce réglage ne modifie pas l'inclinaison de l'assise, laquelle se déplace donc parallèlement à elle-même,

- et que ledit réglage n'affecte aucunement le dossier, ce qui améliore le soutien lombaire dans tous les cas : en effet, la zone bombée 40 du dossier qui correspond au support des reins de l'usager demeure fixe lors dudit réglage, ce qui revient à abaisser automatiquement sa position relative par rapport à l'assise pour les usagers de petite taille et inversement.

A partir du lâcher de la poignée 25, la position réglée en hauteur de l'assise est conservée, soit du simple fait de la démultiplication du mécanisme de commande, combinée avec une compensation de poids suffisante, soit du fait que l'on associe à la poignée un mécanisme d'autoblocage connu en lui-même.

Si l'on désire ensuite rabattre le siège vers l'avant, notamment en vue de libérer l'accès aux places arrière du véhicule si celui-ci est un coupé ou cabriolet, il suffit de dégager le crochet 8 du pion 9 en agissant sur la manette 10, puis de repousser le haut du dossier vers l'avant.

Comme bien visible sur la figure 2, le basculement du siège est alors rendu possible, quelle que soit la hauteur donnée à l'assise, du fait du montage articulé de l'ensemble des éléments rigides 6, 13, 24 et 15 autour des quatre axes A, B, C (axe des pions avant 16) et D (axe des pions arrière 18).

Lorsque, après ce basculement provisoire, le siège est ramené en sa position initiale, l'assise se retrouve en sa hauteur préréglée.

En suite de quoi, et quel que soit le mode de réalisation adopté, on dispose finalement d'un siège de véhicule dont la constitution et le fonctionnement résultent suffisamment de ce qui précède.

Ce siège présente de nombreux avantages par rapport à ceux antérieurement connus, en particulier en ce qu'il permet un réglage facile de l'appui lombaire et en ce qu'il permet d'accrocher solidement le dossier sur le soubassement.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, notamment les variantes suivantes :

- celles où les rotations des pignons seraient commandées non pas manuellement, mais à l'aide d'au moins un moteur électrique,

- celles où l'organe de commande unique (poignée ou moteur électrique), des modes de réalisation décrits ci-dessus, prévu pour commander les rotations des deux pignons avant et celles des deux pignons arrière serait dédoublé, c'est-à-dire remplacé par deux tels organes distincts affectés respectivement à ces deux commandes, solution qui permet de régler non seulement la hauteur de l'assise, mais aussi son inclinaison,

- celles où le dossier 4 ci-dessus décrit serait composé de deux tronçons, savoir un tronçon inférieur comprenant les flasques 15 et les crémaillères 14 et formant embase, et un tronçon supérieur monté sur le tronçon inférieur de façon telle que son inclinaison puisse être réglée à volonté autour d'un axe transversal,

- et celles où l'entretoise rigide 24 serait constituée, non pas sous la forme d'une entretoise à proprement parler, mais par au moins un élément de l'ossature de l'assise, et notamment par un baquet.

**Revendications**

1. Siège de véhicule comprenant un soubassement solidarisable avec le plancher (2) du véhicule, une assise (3) reposant sur le soubassement par l'intermédiaire d'un dispositif de réglage en hauteur et un dossier (4), siège monté pivotant autour d'un axe transversal (A) lié rigidement au soubassement de façon à pouvoir basculer vers l'avant en entraînant l'arrière de l'assise, le dispositif de réglage comprenant une paire de crémaillères avant parallèles (12) espacées transversalement, une paire de crémaillères arrière parallèles (14) espacées transversalement, deux pignons avant coaxiaux (16) d'axe transversal (C) solidarisés entre eux par une traverse avant rigide (17) montée sur l'assise et propres à coopérer avec les crémaillères avant, deux pignons arrière coaxiaux (18) d'axe transversal (D) solidarisés entre eux par une traverse arrière rigide (19) montée sur l'assise et propres à coopérer avec les crémaillères arrière et au moins un organe de commande (25) accessible à l'usager du siège lorsqu'il est assis sur le siège et propre à commander la rotation d'au moins une paire de pignons (27-29), caractérisé en ce que l'axe (C) des deux pignons avant (16) est lié à l'axe (D) des deux pignons arrière (18) par l'intermédiaire d'une entretoise rigide (24), en ce que les crémaillères avant (12) sont montées pivotantes autour d'un axe transversal (B) lié rigidement au soubassement du siège, en ce que les crémaillères arrière (14) sont solidaires du dossier (4) et en ce que l'axe de basculement (A) du siège est lié rigidement au dossier.

2. Siège de véhicule selon la revendication 1, caractérisé en ce que les crémaillères avant (12) sont parallèles aux crémaillères arrière (14) lorsque le dossier se trouve en sa position normale de conduite.

3. Siège de véhicule selon la revendication 2, caractérisé en ce que, lorsque le dossier se trouve en sa position normale de conduite, les crémaillères (12, 14) sont inclinées sur la verticale, leurs extrémités hautes se trouvant en arrière par rapport à leurs extrémités basses.

4. Siège de véhicule selon l'une quelconque des précédentes revendications, caractérisé en ce qu'il comprend des moyens pour solidariser angulairement les pignons avant et les pignons arrière.

5. Siège de véhicule selon la revendication 4, caractérisé en ce que les moyens de solidarisation angulaire comprennent deux roues dentées (30) solidaires respectivement des pignons avant et des pignons arrière et une chaîne sans fin ou analogue (31) coopérant avec ces deux roues.

6. Siège de véhicule selon l'une quelconque des précédentes revendications, caractérisé en ce que l'organe de commande du dispositif de réglage en hauteur de l'assise est un bouton rotatif (25) associé à des moyens de blocage automatique de ce bouton au repos.

7. Siège de véhicule selon l'une quelconque des revendications 1 à 5, caractérisé en ce que l'organe de commande du dispositif de réglage en hauteur de l'assise est l'interrupteur d'excitation d'un moteur électrique.

8. Siège de véhicule selon l'une quelconque des précédentes revendications, caractérisé en ce qu'il comprend un train d'engrenages démultiplicateur (27, 28, 29) interposé entre l'organe de commande et les pignons actionnés par cet organe, de telle sorte que la rotation d'un tour de l'organe ne corresponde qu'à la rotation d'une fraction de tour des pignons.

9. Siège de véhicule selon l'une quelconque des précédentes revendications, caractérisé en ce qu'il comprend au moins un ressort hélicoïdal de tension (32, 33) dont une extrémité est fixée sur l'entretoise rigide (24) reliant l'axe des pignons avant et l'axe des pignons arrière, et dont l'autre extrémité est fixée sur une bande (36, 37) enroulée sur un tambour (38, 39) solidaire d'un desdits pignons, de telle sorte que ce pignon soit sollicité augulairement dans le sens de la montée de l'assise.

10. Siège de véhicule selon l'une quelconque des précédentes revendications, caractérisé en ce que les différents pignons (16, 18) sont logés dans des lumières allongées et étroites (20, 21) dont un bord rectiligne allongé est lisse alors que l'autre est denté de façon à constituer l'une des crémaillères (12, 14), chaque pignon étant alors solidaire d'une bague cylindrique de révolution (22) propre à coagir avec le bord lisse, lequel est décalé légèrement par rapport à la crémaillère associée de façon à permettre les deux contacts lisse et denté concernés.

**Claims**

1. Vehicle seat comprising a base (1) which can be made fast with the floor (2) of the vehicle, a sitting portion (3) resting on the base through a height-adjustment device and a backrest portion (4), said seat being pivotably mounted around a transverse axle (A) connected rigidly to the base so as to be tiltable forwards by pulling the rear of the sitting portion, the adjusting device comprising a pair of transversely spaced parallel front racks (12), a pair of transversely spaced parallel rear racks (14), two coaxial front pinions (16) with a transverse axle (C) fastened to one another by a rigid front cross-rod (17) mounted on the sitting portion and adapted to cooperate with the front racks, two coaxial rear pinions (18) with a transverse axle (D) fastened to one another by a rigid rear cross-rod (19) mounted on the sitting portion and adapted to cooperate with the rear racks and at least one actuating member (25) accessible to the user of the seat when he is sitting on the seat and adapted to actuate the rotation of at least one pair of pinions (27, 29) characterized in that the axle (C) of the two front pinions (16) is joined to the axle (D) of the two rear pinions (18) through a rigid cross-piece (24), in that the front racks (12) are mounted pivotably around a transverse axle (B) connected rigidly to the base of the seat, in that the rear racks (14) are fast to the backrest (4) and in that the tilting axle of the seat is rigidly connected to the backrest.

2. Vehicle seat according to claim 1, characterized in that the front racks (12) are parallel with the rear racks (14) when the backrest is in its normal driving position.

3. Vehicle seat according to claim 2, characterized in that, when the backrest is in its normal driving position, the racks (12, 14) are inclined to the vertical, their top ends being rearwards with repect to their bottom ends.

4. Vehicle seat according to anyone of the preceding claims, characterized in that it comprises means to make fast angularly the front pinions and the rear pinions.

5. Vehicle seat according to claim 4, characterized in that the angular fastening means comprise two toothed wheels (30) fastened respectively to the front pinions and rear pinions and an endless chain (31) or the like cooperating with these two wheels.

6. Vehicle seat according to anyone of the preceding claims, characterized in that the actuating member of the height-regulating device of the seat is a rotary knob (25) associated with automatic locking means for this knob in inactive position.

7. Vehicle seat according to anyone of the preceding claims, characterized in that the control member of the height-regulating device of the sitting portion is the energizing switch of an electric motor.

8. Vehicle seat according to anyone of the preceding claims, characterized in that it comprises a train of reduction gears (27, 28, 29) inserted between the actuating member and the pinions actuated by this member, so that the rotation by one turn of the member only corresponds to the rotation of a fraction of a turn of the pinions.

9. Vehicle seat according to anyone of the preceding claims, characterized in that it comprises at least one helicoidal tension spring (32, 33) of which one end is fixed to the rigid crosspiece (24) joining the axle of the front pinions and the axle of the rear pinions, and of which the other end is fixed to a band (36, 37) wound on a drum (38, 39) fast to one of said pinions, so that this pinion is urged angularly in the direction of the raising of the sitting portion.

10. Vehicle seat according to anyone of the preceding claims, characterized in that the various pinions (16, 18) are housed in elongated and narrow apertures (20, 21) of which one elongated rectilinear edge is smooth whilst the other is toothed so as to constitute one of the racks (12, 14), each pinion being then fast to a cylindrical ring of revolution (22) adapted to coact with the smooth edge, which is offset slightly with respect to the associated rack so as to permit the two smooth and toothed contacts concerned.

**Patentansprüche**

1. Fahrzeugsitz, umfassend einen mit dem Boden (2) des Fahrzeuges fest verbindbaren Unterbau (1), einen auf dem Unterbau unter Zwischenschaltung einer Einrichtung zur Höhenverstellung aufliegenden Sitzteil (3) und eine Rükkenlehne (4), wobei der Sitz um eine transversale, fest mit dem Unterbau verbundene Achse (A) in der Weise schwenkbar gelagert ist, daß er unter Mitnahme des hinteren Bereiches des Sitzteiles nach vorne kippen kann, wobei ferner die Einrichtung zur Höhenverstellung ein Paar vorderer, paralleler und in Querrichtung mit Abstand zueinander angeordneter Zahnstangen (12) aufweist, ferner ein Paar hinterer, paralleler und in Querrichtung mit Abstand zueinander angeordneter Zahnstangen (14), zwei vordere, koaxiale Ritzel (16) mit einer transversalen Achse (C), die miteinander durch eine vordere, starre, am Sitzteil angeordnete Traverse (17) fest miteinander verbunden sind und mit den vorderen Zahnstangen zusammenwirken, zwei hintere, koaxiale Ritzel (18) mit transversaler Achse (D), die miteinander durch eine hintere, starre, am Sitzteil angeordnete Traverse (19) fest miteinander verbunden sind und die mit den hinteren Zahnstangen zusammenwirken, sowie mindestens ein Betätigungsorgan (25), welches für den Benutzer des Sitzes erreichbar ist, wenn er auf dem Sitz sitzt und welches dazu dient, wenigstens ein Paar Ritzel (27 bis 29) zu verdrehen, dadurch gekennzeichnet, daß die Achse (C) der beiden vorderen Ritzel (16) mit der Achse (D) der beiden hinteren Ritzel (18) über eine starre Strebe (24) verbunden ist, daß die vorderen Zahnstangen (12) um eine transversale Achse (B), die fest mit dem Unterbau des Sitzes verbunden ist, schwenkbar gelagert ist, daß die hinteren Zahnstangen (14) mit der Rückenlehne (4) fest verbunden sind und daß die Kippachse (A) des Sitzes starr mit der Rückenlehne verbunden ist.

2. Fahrzeugsitz nach Anspruch 1, dadurch gekennzeichnet, daß die vorderen Zahnstangen (12) zu den hinteren Zahnstangen (14) parallel sind, wenn sich die Rückenlehne in ihrer normalen Fahrposition befindet.

3. Fahrzeugsitz nach Anspruch 2, dadurch gekennzeichnet, daß dann, wenn die Rückenlehne sich in ihrer normalen Fahrposition befindet, die Zahnstangen (12, 14) gegen die Vertikale geneigt sind, wobei sich ihre oberen Enden gegenüber ihren unteren Enden weiter hinten befinden.

4. Fahrzeugsitz nach einem der vorstehenden Ansprüche, dadurch gekennzeichnet, daß er Mittel umfaßt, um die vorderen Ritzel und die hinteren Ritzel winkelig zusammenzubinden.

5. Fahrzeugsitz nach Anspruch 4, dadurch gekennzeichnet, daß die Mittel zum winkelig Zusammenbinden zwei Zahnräder (30) umfassen, die jeweils mit den vorderen Ritzeln bzw. den hinteren Ritzeln fest verbunden sind, sowie eine endlose Kette (31) oder dergleichen, welche mit den beiden Zahnrädern zusammenwirkt.

6. Fahrzeugsitz nach einem der vorstehenden Ansprüche, dadurch gekennzeichnet, daß das Betätigungsorgan der Einrichtung für die Höhenverstellung des Sitzteils ein Drehknopf (25) ist, welcher mit Mitteln zum automatischen Blockieren des Drehknopfes in seiner Ruhestellung verbunden ist.

7. Fahrzeugsitz nach einem der Ansprüche 1 bis 5, dadurch gekennzeichnet, daß das Betätigungsorgan der Einrichtung für die Höheneinstellung des Sitzteils durch den Startschalter eines elektrischen Motors gebildet ist.

8. Fahrzeugsitz nach einem der vorstehenden Ansprüche, dadurch gekennzeichnet, daß ein Untersetzungs-Getriebezug (27, 28, 29) vorgesehen ist, welcher zwischen dem Betätigungsorgan und den durch dieses Organ betätigten Ritzeln angeordnet und derart ausgebildet ist, daß eine Umdrehung dieses Organs nur einem Bruchteil einer Umdrehung der Ritzel entspricht.

9. Fahrzeugsitz nach einem der vorstehenden Ansprüche, dadurch gekennzeichnet, daß wenigstens eine Spiralzugfeder (32, 33) vorgesehen ist, deren eines Ende an der starren Strebe (24) befestigt ist, die die Achse der vorderen Ritzel mit der Achse der hinteren Ritzel verbindet, und deren anderes Ende mit einem Band (36, 37) verbunden ist, welches auf eine mit einem der Ritzel fest verbundenen Trommel (38, 39) gewickelt ist derart, daß dieses Ritzel in den dem Höherstellen des Sitzteils entsprechenden Drehsinn vorgespannt ist.

10. Fahrzeugsitz nach einem der vorstehenden Ansprüche, dadurch gekennzeichnet, daß die verschiedenen Ritzel (16, 18) in langgestreckten und schmalen Ausnehmungen (20, 21) angeordnet sind, deren eine gerade Längskante glatt und deren andere gezahnt ist, so daß sie eine der Zahnstangen (12, 14) bildet, wobei jedes Ritzel mit einem zylindrischen Laufring (22) fest verbunden ist, welcher mit der glatten Längskante zusammenwirkt, die ihrerseits bezüglich der zugeordneten Zahnstange leicht versetzt ist, so daß die beiden genannten Wirkeingriffe mit der glatten und der gezahnten Längskante möglich sind.

FIG.1.

FIG.2.

0 231 698

FIG.3.

FIG.4.

FIG.5.